# EUROPEAN PATENT APPLICATION

(11) **EP 4 838 569 A1**
(43) Date of publication of application: **11.11.2026**
(21) Application number: 25913268.6
(22) Date of filing: 27.10.2025
(51) Int. Cl.: H01M 4/131, H01M 4/136, H01M 4/58, H01M 4/525, H01M 4/505, H01M 4/36, H01M 4/587, H01M 4/38, H01M 4/48, H01M 10/0525

(54) **ELECTRODE INCLUDING ACTIVE MATERIAL LAYER HAVING DOUBLE-LAYER STRUCTURE AND SECONDARY BATTERY INCLUDING SAME**

(30) Priority: 24.12.2024 KR 20240195409
(71) Applicant: LG Energy Solution, Ltd., Seoul 07335 (KR)
(72) Inventor: KIM, Shul Kee, Daejeon 34122 (KR); KIM, Gwang Jin, Daejeon 34122 (KR); KIM, Du Yeol, Daejeon 34122 (KR); YOO, Kwang Ho, Daejeon 34122 (KR); YOO, Sun Young, Daejeon 34122 (KR); YU, Hyun Jin, Daejeon 34122 (KR)
(74) Representative: Goddar, Heinz J.
(86) International application number: PCT/KR2025/017209
(87) International publication number: WO 2026/141911

(57) **Abstract**

The present disclosure provides an electrode with both improved high-temperature cycle life characteristics and improved low-temperature energy performance, and a secondary battery including the same.

## Description

### [Technical field]

This application claims the benefit of Korean Patent Application No. 10-2024-0195409, filed on December 24, 2024, all of which are incorporated herein in its entirety by reference.

### Technical Field

The present disclosure relates to an electrode having a dual-layer structure and a secondary battery including the same, and more particularly, the electrode includes heterogeneous active materials with controlled particle diameters.

### [Background]

Lithium secondary batteries are used as energy sources for various electronic devices, and as technology advances, there is an increasing demand for batteries capable of delivering greater capacity within the same space or design compared to conventional batteries.

As positive electrode active materials for such lithium secondary batteries, lithium transition metal composite oxides have been used. Conventionally, active research has been conducted on lithium nickel oxide-based active materials having high operating voltage and excellent capacity characteristics. However, lithium nickel oxide-based active materials have a limitation of low thermal stability.

As one alternative approach, research has been conducted on technologies applying iron phosphate as a positive electrode active material. However, iron phosphate-based active materials have problems of poor adhesion to the current collector and low capacity characteristics. In addition, iron phosphate-based active materials typically have small particle diameters. However, electrodes employing active materials with small particle sizes suffer from increased side reactions and degraded cycle life performance due to increased specific surface area (e.g., Brunauer-Emmett-Teller (BET)) caused by the small particle size. Furthermore, there is a limitation in that energy delivery is suppressed at low temperatures as lithium ion transport within the electrode becomes restricted.

Accordingly, development of new technologies capable of overcoming the limitations associated with the application of iron phosphate-based active materials is required.

### [Summary]

### [Technical Problem]

Accordingly, the present disclosure aims to provide an electrode with improved high-temperature cycle life characteristics and low-temperature energy performance, and a secondary battery including the same.

### [Technical Solution]

In order to solve the above-described problems, in an aspect, the electrode for a secondary battery according to the present disclosure includes: a current collector; a first active material layer formed on one surface or both surfaces of the current collector; and a second active material layer formed on the first active material layer. Additionally, the entire active material layer including the first and second active material layers has a Di value in the range of 1.1 to 5 according to the following Formula 1: [Formula 1] $Di = \frac{\left({Di}^{2 nd}-{Di}^{1 st}\right)}{{Di}^{Total}}$

In Formula 1 above,
Di^{1st} represents the average particle size (D50) of the active material contained in the first active material layer,
Di^{2nd} represents the average particle size (D50) of the active material contained in the second active material layer, and
Di^{Total} represents the average particle size (D50) of the active materials contained in the entire active material layer including the first and second active material layers.

Specifically, in Formula 1, Di^{Total} is in the range of 1 to 3 (µm).

Specifically, the Di value according to Formula 1 is in the range of 1.1 to 2.5.

In an aspect, the thickness of the first active material layer is in the range of 40% to 80% on average, based on the total active material layer thickness.

In another aspect, the first and second active material layers each independently include one or more of the active materials according to the following Chemical Formula 1 and Chemical Formula 2 as active materials:

[Chemical Formula 1] Li₁₊ₐFe_{1-b}M¹_{b}(PO_{4-c})X_{c}

In Chemical Formula 1,
M¹ includes one or two or more elements selected from the group consisting of aluminum (Al), magnesium (Mg), nickel (Ni), cobalt (Co), manganese (Mn), titanium (Ti), gallium (Ga), copper (Cu), vanadium (V), niobium (Nb), zirconium (Zr), cerium (Ce), indium (In), zinc (Zn), and yttrium (Y),
X includes one or two or more elements selected from the group consisting of fluorine (F), sulfur (S), and nitrogen (N), and
a, b, and c are in the ranges of -0.5 ≤ a ≤ 0.5, 0 ≤ b ≤ 0.9, and 0 ≤ c ≤ 0.8, respectively,

   [Chemical Formula 2] LiₚNi_{1-q-r-s}Co_{q}MnᵣM²ₛO₂

In Chemical Formula 2,
M² is one or more elements selected from the group consisting of Al, Zr, Ti, Mg, tantalum (Ta), Nb, molybdenum (Mo), and chromium (Cr), and 0.9 ≤ p ≤ 1.5, 0 ≤ q ≤ 1, 0 ≤ r ≤ 0.5, 0 ≤ s ≤ 0.1, and 0 ≤ q+r+s ≤ 1.

Specifically, in Chemical Formula 1, b is in the range of 0.3 to 0.9.

Specifically, in Chemical Formula 2, 1-q-r-s is in the range of 0.3 to 0.7.

In an aspect, the first active material layer includes the active material according to Chemical Formula 1 as an active material. In addition, the second active material layer includes the active material according to Chemical Formula 2 as an active material, or includes a mixture of the active material according to Chemical Formula 1 and the active material according to Chemical Formula 2. Specifically, the second active material layer includes a mixture of the active material according to Chemical Formula 1 and the active material according to Chemical Formula 2 as active materials. For example, the mixing ratio of the active material according to Chemical Formula 1 is 40 wt% or less in such second active material layer including the mixture.

For example, the electrode can be applied as a positive electrode.

Furthermore, the present disclosure provides a secondary battery including the electrode described above. Specifically, the electrode is applied as the positive electrode of the secondary battery.

In an embodiment, the secondary battery includes a positive electrode, a negative electrode, and a separator positioned between the positive electrode and the negative electrode. Here, the positive electrode refers to the electrode described earlier.

The negative electrode includes a negative electrode current collector and a negative electrode active material layer positioned on the negative electrode current collector and containing a negative electrode active material. Specifically, the negative electrode active material includes a carbon-based active material.

In an embodiment, the negative electrode active material further includes a silicon-based active material. Specifically, the silicon-based active material includes one or more selected from silicon (Si), silicon carbide (SiC), a silicon/carbon composite (Si/C), and silicon oxide (SiO_{q}, where 0.8 ≤ q ≤ 2.5). For example, the content of the silicon-based active material is in the range of 0.1 wt% to 30 wt%, based on the total weight of the active material in the negative electrode active material layer.

For example, the secondary battery is a battery for automobiles or energy storage systems (ESS).

### [Advantageous Effects]

The electrode for a secondary battery according to the present disclosure can simultaneously provide excellent high-temperature cycle life characteristics and low-temperature energy performance.

### [Brief Description of the Drawings]

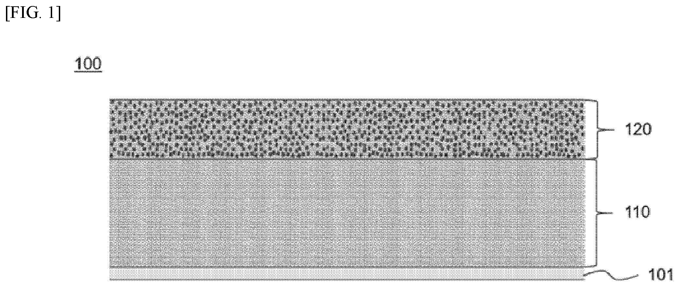

FIG. 1 is a schematic diagram of a cross-sectional structure of the positive electrode according to Example 4 of the present disclosure.

### [Detailed Description]

The present disclosure may be modified in various ways and may have several embodiments, and specific aspects will be described in detail in the detailed description.

However, this is not intended to limit the present disclosure to specific aspects, and it should be understood that all modifications, equivalents, and alternatives included in the spirit and technical scope of the present disclosure are encompassed.

In the present disclosure, terms such as "comprises" or "has" designate the existence of features, numbers, steps, operations, components, parts, or combinations thereof described in the specification, and should not be understood as precluding the possibility of the existence or addition of one or more other features, numbers, steps, operations, components, parts, or combinations thereof.

In the present disclosure, when a part such as a layer, film, region, or plate is described as being "on" another part, this includes not only the case where it is "directly on" the other part but also the case where another part is interposed therebetween. Moreover, when a part such as a layer, film, region, or plate is described as being "under" another part, this includes not only the case where it is "directly under" the other part but also the case where another part is interposed therebetween. In addition, being disposed "on" in this application may include being disposed on the lower part as well as the upper part.

Hereinafter, the present disclosure will be described in more detail.

In an aspect, the electrode for a secondary battery according to the present disclosure includes: a current collector; a first active material layer formed on one surface or both surfaces of the current collector; and a second active material layer formed on the first active material layer. Specifically, the entire active material layer including the first and second active material layers has a Di value in the range of 1.1 to 3.5 according to the following Formula 1. [Formula 1] $Di = \frac{\left({Di}^{2 nd}-{Di}^{1 st}\right)}{{Di}^{Total}}$

In Formula 1 above,
Di^{1st} represents the average particle size (D50) of the active material contained in the first active material layer,
Di^{2nd} represents the average particle size (D50) of the active material contained in the second active material layer, and
Di^{Total} represents the average particle size (D50) of the active materials contained in the entire active material layer including the first and second active material layers.

In the present disclosure, Formula 1 represents the control of the particle size distribution of the active materials included in the first and second active material layers. The average particle size (D50) for each layer is calculated based on the median particle diameter (D50), specifically based on the volume-based median (Dv50). The active material having the average particle size (D50) may be determined, for example, by dynamic light scattering (DLS) or the like. Alternatively, active materials having the relevant average particle size (D50) may be obtained commercially.

Specifically, in Formula 1 above, Di^{Total} is in the range of 1 to 3 (µm). More specifically, Di^{Total} is in the range of 1.1 to 3 (µm), 1.5 to 3 (µm), 1 to 2.2 (µm), 1.5 to 2 (µm), 2 to 2.5 (µm), or 1.5 to 2.2 (µm).

In addition, the Di value according to Formula 1 is in the range of 1.1 to 5, 1.1 to 3.5, 1.1 to 2.5, 1.1 to 2, 1.5 to 2, 2 to 2.5, or 1.1 to 1.5.

In the present disclosure, Formula 1 represents the control of the particle diameter distribution of the active materials included in the first and second active material layers. In the present disclosure, by controlling the ranges related to Formula 1 as described above, the high-temperature cycle life and low-temperature energy performance of the secondary battery can be improved. In particular, it was confirmed that when the particle size distribution (Di) defined in Formula 1 has a small value within the above range, the low-temperature energy performance is improved.

In an aspect, the thickness of the first active material layer is in the range of 40% to 80% on average, based on the total active material layer thickness. Specifically, the thickness of the first active material layer is in the range of 40% to 80%, 45% to 80%, 40% to 75%, 55% to 80%, or 40% to 55% on average. The first active material layer includes an active material having a relatively small average particle diameter. For example, the active material included in the first active material layer may be a lithium iron phosphate active material and may have an average particle diameter of 0.5 µm to 1.1 µm. In the present disclosure, maintaining the thickness of the first active material layer above a certain level is advantageous for improving high-temperature cycle life and low-temperature energy performance.

In an aspect, the first active material layer includes, as active materials, one or more of the active materials each independently according to the following Chemical Formula 1 and Chemical Formula 2.

[Chemical Formula 1] Li₁₊ₐFe_{1-b}M¹_{b}(PO_{4-c})X_{c}

In Chemical Formula 1,
M¹ includes one or two or more elements selected from the group consisting of Al, Mg, Ni, Co, Mn, Ti, Ga, Cu, V, Nb, Zr, Ce, In, Zn, and Y,
X includes one or two or more elements selected from the group consisting of F, S, and N, and
a, b, and c are in the ranges of -0.5 ≤ a ≤ 0.5, 0 ≤ b ≤ 0.9, and 0 ≤ c ≤ 0.8, respectively.

In Chemical Formula 1, for example, b is in the range of 0 to 0.7, 0.1 to 0.9, 0.3 to 0.9, 0.5 to 0.9, or 0.3 to 0.7. In an example, in Chemical Formula 1, b is in the range of 0.61 to 0.85, whereby the operating voltage range of the electrode can be increased.

In an example, the active material according to Chemical Formula 1 is one or more selected from Li₁₊ₐFePO₄ (-0.3 ≤ a ≤ 0.3) and Li₁₊ₐFe_{1-b}Mn_{b}PO₄ (-0.3 ≤ a ≤ 0.3, 0.3 ≤ b ≤ 0.9). For example, the active material according to Chemical Formula 1 is one or more selected from LiFePO₄, LiFe_{0.7}Mn_{0.3}PO₄, LiFe_{0.5}Mn_{0.5}PO₄, and LiFe_{0.3}Mn_{0.7}PO₄.

In another example, the active material according to Chemical Formula 1 may have a carbon (C)-coated structure. Through carbon coating, the electrical conductivity of the active material according to Chemical Formula 1 can be enhanced.

[Chemical Formula 2] LiₚNi_{1-q-r-s}Co_{q}MnᵣM²ₛO₂

In Chemical Formula 2,
M² is one or more elements selected from the group consisting of Al, Zr, Ti, Mg, Ta, Nb, Mo, and Cr, and 0.9 ≤ p ≤ 1.5, 0 ≤ q ≤ 1, 0 ≤ r ≤ 0.5, 0 ≤ s ≤ 0.1, and 0 ≤ q+r+s ≤ 1.

Specifically, the active material according to Chemical Formula 2 may be represented as Liₚ(Ni_{1-q-r}Co_{q}Mnᵣ)O₂ (0.5 < p < 1.3, 0 < q < 1, 0 < r < 1). For example, q and r in Chemical Formula 2 are each independently in the range of 0.05 to 0.9, 0.1 to 0.8, or 0.1 to 0.3. More specifically, in Chemical Formula 2, 1-q-r-s is in the range of 0.3 to 0.7 or 0.5 to 0.7.

In an example, the first active material layer includes the active material according to Chemical Formula 1 as an active material. The first active material layer may include a lithium iron phosphate-based active material represented by Chemical Formula 1. For example, the first active material layer includes exclusively the lithium iron phosphate-based active material represented by Chemical Formula 1 as the active material.

In addition, the second active material layer includes the active material according to Chemical Formula 2 as an active material, or includes a mixture of the active material according to Chemical Formula 1 and the active material according to Chemical Formula 2. For example, the second active material layer includes exclusively the active material according to Chemical Formula 2 as the active material. In another example, the second active material layer includes a mixture of the active material according to Chemical Formula 1 and the active material according to Chemical Formula 2 as active materials.

In an example, the second active material layer includes a mixture of the active material according to Chemical Formula 1 and the active material according to Chemical Formula 2 as active materials. Here, the mixing ratio of the active material according to Chemical Formula 1 is 40 wt% or less. Specifically, the mixing ratio of the active material according to Chemical Formula 1 is in the range of 0.1 to 40 wt%, 0.1 to 35 wt%, 10 to 40 wt%, 20 to 40 wt%, 0.1 to 15 wt%, or 25 to 35 wt%. The mixing ratio of the active material according to Chemical Formula 1 is based on the combined content of the active material according to Chemical Formula 1 and the active material according to Chemical Formula 2 in the second active material layer.

For example, in the present disclosure, the first active material layer includes, as an active material, a lithium iron phosphate-based active material (e.g., LFP or LMFP) having a relatively small particle diameter exclusively. Furthermore, the second active material layer includes, as an active material, a lithium nickel-cobalt-based active material (e.g., NCM) having a relatively large particle diameter exclusively, or includes a mixture of a lithium iron phosphate-based active material and a lithium nickel-cobalt-based active material. The present disclosure can secure the safety of the secondary battery while improving high-temperature cycle life and low-temperature energy performance through such a combination.

For example, the active material according to Chemical Formula 1 has an average particle diameter (D50) in the range of 0.1 µm to 2 µm, 0.3 µm to 1.5 µm, 0.5 µm to 1.1 µm, 0.4 µm to 0.8 µm, or 0.8 µm to 1.1 µm. In addition, the active material according to Chemical Formula 2 has an average particle diameter (D50) in the range of 3 µm to 15 µm, 3 µm to 10 µm, 3 µm to 5 µm, or 4 µm to 5 µm.

In an aspect, the combined loading amount of the first and second active material layers is in the range of 400 to 1,000 (mg/25 cm²) on average. Specifically, the combined loading amount of the first and second active material layers is in the range of 500 to 1,000 (mg/25 cm²) on average, 600 to 1,000 (mg/25 cm²) on average, 500 to 800 (mg/25 cm²) on average, or 400 to 700 (mg/25 cm²) on average. The electrode for a secondary battery according to the present disclosure is formed by simultaneously coating the lower and upper active material layers on the current collector by applying DLD (Double Layer Slot Die Coating) technology. Through this, the electrode has excellent electrode manufacturing efficiency and instantiates high loading amounts.

In an aspect, the electrode may be applied as a positive electrode. Specifically, the electrode is a positive electrode for a secondary battery. The positive electrode for a secondary battery has a structure in which an active material layer is formed on a current collector. In the present disclosure, the active material layer includes the first and second active material layers. In the first and second active material layers, the content of the active material may be 85 to 98 parts by weight, specifically 90 to 98 parts by weight, or 95 to 98 parts by weight, per 100 parts by weight of each active material layer.

In addition, the first and second active material layers may further include a conductive material, a binder, and/or a dispersant, in addition to the active material.

Here, the conductive material may be used to improve properties such as the electrical conductivity of the positive electrode, and one or more selected from the group consisting of carbon black, acetylene black, Ketjen black, carbon fiber, and carbon nanotubes (CNT) may be used. For example, the conductive material may include carbon black or carbon nanotubes (CNT).

In addition, the content of the conductive material may be in the range of 0.1 to 5 parts by weight, 0.2 to 3 parts by weight, 0.3 to 1.5 parts by weight, or 0.5 to 1.2 parts by weight, per 100 parts by weight of the active material layer. By applying carbon nanotubes (CNT) as the conductive material, the content of the conductive material can be reduced while maintaining electrical conductivity.

Furthermore, the binder may include one or more resins selected from the group consisting of polyvinylidene fluoride-hexafluoropropylene copolymer (PVDF-co-HFP), polyvinylidene fluoride (PVDF), polyacrylonitrile (PAN), polymethyl methacrylate (PMMA), and copolymers thereof. In one example, the binder may include polyvinylidene fluoride (PVDF).

In addition, the binder may be included in an amount of 1 to 10 parts by weight, specifically 2 to 8 parts by weight, or 2 to 5 parts by weight, per 100 parts by weight of the total active material layer.

Meanwhile, the positive electrode for a secondary battery according to the present disclosure may use, as a current collector, a material having high conductivity without causing chemical changes to the battery. For example, stainless steel, aluminum, nickel, titanium, fired carbon, or the like may be used, and in the case of aluminum or stainless steel, those surface-treated with carbon, nickel, titanium, silver, or the like may also be used. In addition, the current collector may have fine irregularities formed on its surface to enhance adhesion of the positive electrode active material, and various forms such as films, sheets, foils, nets, porous bodies, foams, and non-woven fabrics are possible. Furthermore, the average thickness of the current collector may be appropriately applied in the range of 3 to 500 µm, considering the conductivity and total thickness of the positive electrode to be manufactured.

### Secondary Battery

In addition, in an aspect, the present disclosure provides a secondary battery including the above-described electrode for a secondary battery. The secondary battery may include a positive electrode, a negative electrode, and a separator positioned between the positive electrode and the negative electrode. In addition, the electrode described above may be applied as the positive electrode.

Specifically, the secondary battery may be a battery for automobiles or energy storage systems (ESS). For example, the secondary battery is a lithium secondary battery or a pouch-type lithium secondary battery.

The secondary battery according to the present disclosure may include a positive electrode, a negative electrode, and a separator positioned between the positive electrode and the negative electrode.

The negative electrode may include a negative electrode current collector and a negative electrode active material layer positioned on the negative electrode current collector and containing a negative electrode active material. Specifically, the negative electrode is manufactured by coating, drying, and pressing a negative electrode active material on the negative electrode current collector, and may, optionally, further include a conductive material, an organic binder polymer, a filler, and the like as described above.

In addition, the negative electrode includes a negative electrode current collector and a negative electrode active material layer positioned on the negative electrode current collector and containing a negative electrode active material. In addition, the negative electrode active material includes a carbon-based active material. For example, the carbon-based active material may include graphite having a fully developed layered crystal structure such as natural graphite; soft carbon having a low-crystallinity layered crystal structure (graphene structure; a structure in which hexagonal honeycomb-shaped planes of carbon are arranged in layers); hard carbon in which such structures are mixed with amorphous portions; artificial graphite; expanded graphite; carbon fiber; non-graphitizable carbon; carbon black; carbon nanotubes; fullerene; activated carbon and other carbon and graphite materials; metal composite oxides such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb, Ge; Me': Al, B, P, Si, elements of Groups 1, 2, and 3 of the periodic table, halogens; 0 < x ≤ 1; 1 ≤ y ≤ 3; 1 ≤ z ≤ 8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O_{4,} and Bi₂O₅; conductive polymers such as polyacetylene; Li-Co-Ni-based materials; titanium oxide; lithium titanium oxide, and the like. For example, the carbon-based active material may include graphite. The graphite may include one or more of natural graphite and artificial graphite. For instance, the carbon-based active material may include natural graphite alone or may include a mixture of natural graphite and artificial graphite.

In an aspect, the negative electrode further includes a silicon-based active material as an active material. Specifically, the content of the silicon-based active material is in the range of 0.1 wt% to 30 wt%, based on the total weight of the active material in the negative electrode active material layer. Specifically, the content of the silicon-based active material is in the range of 0.1 wt% to 30 wt%, 1 wt% to 30 wt%, 1 wt% to 10 wt%, 0.1 wt% to 5 wt%, 5 wt% to 30 wt%, or 6 wt% to 20 wt%, based on the total weight of the active material contained in the negative electrode active material layer. The silicon-based active material has the advantage of being able to increase the negative electrode capacity compared to the carbon-based active material. On the other hand, the silicon-based active material has the problem of causing volume changes during the charge-discharge process. Therefore, it is desirable to control the content of the silicon-based active material in consideration of the application field or form of the secondary battery.

Specifically, the silicon-based active material includes one or more selected from silicon (Si), silicon carbide (SiC), a silicon/carbon composite (Si/C), and silicon oxide (SiO_{q}, where 0.8 ≤ q ≤ 2.5). In one example, the active material may include graphite and silicon (Si)-containing particles together, and the graphite may include one or more of natural graphite having a layered crystal structure and artificial graphite having an isotropic structure. The silicon (Si)-containing particles are particles including silicon (Si) as a main metal component, and may include silicon (Si) particles, silicon oxide (SiO, SiO₂) particles, or a mixture of the silicon (Si) particles and the silicon oxide (SiO, SiO₂) particles.

Furthermore, the silicon-based active material may be doped with or alloyed with Li, Mg, Al, Ca, Ti, or the like. In addition, the silicon-based active material may be surface-treated with a carbon coating layer or the like on the surface for the purpose of suppressing volume expansion during charging or improving electrical conductivity.

The conductive material may include one or more of carbon blacks such as acetylene black, Denka black, Ketjen black, Super-P, furnace black, lamp black, and thermal black; graphene; carbon nanotubes; and carbon fibers, but is not limited thereto.

In an example, the negative electrode active material layer may contain carbon black, carbon nanotubes, carbon fibers, and the like as a conductive material, alone or in combination.

Here, the content of the conductive material may be 0.1 to 5 parts by weight per 100 parts by weight of the total negative electrode active material layer. Specifically, the conductive material may be 0.1 to 5 parts by weight, 0.1 to 3 parts by weight, 2 to 6 parts by weight, or 0.5 to 2 parts by weight per 100 parts by weight of the total negative electrode active material layer. The present disclosure can prevent a decrease in charge capacity due to increased resistance of the negative electrode caused by a low content of the conductive material by controlling the content of the conductive material in the above range. In addition, the present disclosure can prevent a decrease in charge capacity due to a reduction in the content of the negative electrode active material or an increase in electrical resistance due to an increased loading amount of the negative electrode active material layer caused by an excessive amount of the conductive material exceeding the above range.

Furthermore, the binder is a component that assists in coupling the negative electrode active material and the conductive material and coupling to the current collector, and may be appropriately applied within a range that does not deteriorate the electrical properties of the negative electrode. For example, the binder may include one or more of vinylidene fluoride-hexafluoropropylene copolymer (PVDF-co-HFP), polyvinylidene fluoride (PVdF), polyacrylonitrile (PAN), polymethyl methacrylate (PMMA), polyvinyl alcohol, starch, hydroxypropyl cellulose, regenerated cellulose, polyvinylpyrrolidone, polytetrafluoroethylene (PTFE), polyethylene, polypropylene, polyacrylic acid, ethylene-propylene-diene monomer (EPDM), sulfonated ethylene-propylene-diene monomer, styrene-butadiene rubber (SBR), and fluororubber. For example, the binder is styrene-butadiene rubber (SBR) or fluororubber.

The content of the binder may be 0.1 to 5 parts by weight per 100 parts by weight of the total negative electrode active material layer. Specifically, the binder may be 0.1 to 5 parts by weight, 0.1 to 3 parts by weight, or 2 to 6 parts by weight per 100 parts by weight of the total negative electrode active material layer. The present disclosure can prevent a decrease in adhesion of the active material layer due to a low content of the binder or a deterioration of the electrical properties of the negative electrode due to an excessive amount of the binder by controlling the content of the binder contained in the negative electrode active material layer within the above range.

In addition, the negative electrode active material layer may further include a thickener as described above.

In addition, the negative electrode active material layer may have an average thickness of 100 µm to 800 µm, specifically 100 µm to 780 µm, 100 µm to 550 µm, 120 µm to 500 µm, 140 µm to 200 µm, or 140 µm to 160 µm.

Furthermore, the negative electrode current collector is not particularly limited as long as it has high conductivity without causing chemical changes to the battery, and for example, copper, stainless steel, nickel, titanium, fired carbon, and the like may be used, and in the case of copper or stainless steel, those surface-treated with carbon, nickel, titanium, silver, and the like may also be used.

In addition, similar to the positive electrode current collector, the negative electrode current collector may also have fine irregularities formed on its surface to enhance binding force with the negative electrode active material, and various forms such as films, sheets, foils, nets, porous bodies, foams, and non-woven fabrics are possible. Furthermore, the average thickness of the negative electrode current collector may be appropriately applied in the range of 3 to 500 µm, considering the conductivity and total thickness of the negative electrode to be manufactured.

Furthermore, the separator interposed between the positive electrode and the negative electrode of the lithium secondary battery is an insulating thin film having high ion permeability and mechanical strength, and is not particularly limited as long as it is commonly used in the art. Specifically, the separator may include one or more polymers selected from chemically resistant and hydrophobic polypropylene, polyethylene, and polyethylene-propylene copolymer. The separator may be in the form of a porous polymer substrate such as a sheet or non-woven fabric including the above-described polymer, and in some cases, may be in the form of a composite separator in which organic or inorganic particles are coated on the porous polymer substrate by an organic binder. Furthermore, the separator may have an average pore diameter of 0.01 µm to 10 µm and an average thickness of 5 µm to 300 µm.

Meanwhile, the secondary battery according to the present disclosure is not particularly limited, but may be a secondary battery in the form that may include a stack-type, zigzag-type, or zigzag-stack-type electrode assembly.

In addition, the secondary battery according to the present disclosure may include a lithium salt-containing electrolyte. The lithium salt-containing electrolyte may include an electrolyte solution and a lithium salt, and the electrolyte solution may use a non-aqueous organic solvent, an organic solid electrolyte, an inorganic solid electrolyte, and the like.

As the non-aqueous organic solvent, for example, aprotic organic solvents such as N-methyl-2-pyrrolidone, ethylene carbonate, propylene carbonate, butylene carbonate, dimethyl carbonate, diethyl carbonate, gamma-butyrolactone, 1,2-dimethoxyethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate may be used.

As the organic solid electrolyte, for example, polyethylene derivatives, polyethylene oxide derivatives, polypropylene oxide derivatives, phosphoric acid ester polymers, poly agitation lysine, polyester sulfide, polyvinyl alcohol, polyvinylidene fluoride, and polymers containing ionic dissociation groups may be used.

As the inorganic solid electrolyte, for example, nitrides, halides, and sulfates of Li such as Li₃N, LiI, Li₅Ni₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, and the like may be used.

The lithium salt is a substance that readily dissolves in a non-aqueous electrolyte, and for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lower aliphatic carboxylic acid lithium, lithium tetraphenylborate, imides, and the like may be used.

In addition, additives such as pyridine, triethyl phosphite, triethanolamine, cyclic ethers, ethylenediamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethanol, aluminum trichloride, and the like may be added to the electrolyte solution for the purpose of improving charge-discharge characteristics, flame retardancy, and the like. In some cases, halogen-containing solvents such as carbon tetrachloride and trifluoroethylene may be further included to impart nonflammability, carbon dioxide gas may be further included to improve high-temperature storage characteristics, and FEC (Fluoro-Ethylene Carbonate), PRS (Propene sultone), and the like may be further included.

Meanwhile, in an aspect, the present disclosure provides a module including the above-described secondary battery or a battery pack including the module.

The battery pack may be used as a power source for medium to large devices requiring high-temperature stability, long cycle characteristics, and high rate characteristics, and specific examples of such medium to large devices include power tools driven by electric motors; electric vehicles including electric vehicles (EV), hybrid electric vehicles (HEV), and plug-in hybrid electric vehicles (PHEV); electric two-wheelers including electric bicycles (E-bikes) and electric scooters (E-scooters); electric golf carts; energy storage systems, and the like, and more specifically, hybrid electric vehicles (HEV), but are not limited thereto.

Furthermore, the positive electrode and the negative electrode may be wound in a jelly-roll form and stored in a cylindrical battery, a prismatic battery, or a pouch-type battery, or may be stored in a pouch-type battery in a folding or stack-and-folding form. For example, the secondary battery according to the present disclosure may be a pouch-type battery.

As described above, the secondary battery according to the present disclosure may be used in battery modules or battery packs including a plurality of unit cells. Specifically, it is useful in portable devices such as mobile phones, laptop computers, and digital cameras, and in the field of electric vehicles such as hybrid electric vehicles (HEV).

### Mode for Carrying out Aspects of the Disclosure

Hereinafter, the present disclosure will be described in more detail through Examples and Experimental Examples.

However, the following Examples and Experimental Examples are merely illustrative of the present disclosure, and the content of the present disclosure is not limited to the following Examples and Experimental Examples.

### Examples 1 to 4 and Comparative Example 1: Preparation of Positive electrodes

LiMn_{0.6}Fe_{0.4}PO₄ positive electrode active material (hereinafter referred to as 'LMFP'), a conductive material including a mixture of carbon nanotubes (CNT) and carbon black, and a PVDF binder were mixed at a weight ratio of 95:2:3 in an N-methylpyrrolidone (NMP) solvent to prepare a first electrode slurry. As the positive electrode active material (LMFP), an active material having an average particle diameter (D50) of 0.6 (µm) was used.

Two types of positive electrode active materials, a conductive material including a mixture of carbon nanotubes (CNT) and carbon black, and a PVDF binder were mixed at a weight ratio of 95:2:3 in an N-methylpyrrolidone (NMP) solvent to prepare a second electrode slurry. The two types of positive electrode active materials were a mixture of LiMn_{0.6}Fe_{0.4}PO₄ (LMFP) and LiNi_{0.65}Co_{0.15}Mn_{0.2}O₂ (hereinafter referred to as 'NCM').

The first and second electrode slurries were sequentially applied onto an aluminum current collector (15 µm Al A grade) using a dual slot die. Thereafter, the first and second active material layers were dried and rolled to prepare a positive electrode having a dual-layer structure including the first and second active material layers. The first electrode slurry was formed as the first active material layer (lower layer), and the second electrode slurry was formed as the second active material layer (upper layer). The compositions of the active materials contained in the first and second electrode slurries are listed in Table 1 below. The loading amount per layer was controlled during the discharge of the first and second electrode slurries to satisfy the composition in Table 1 and the Di value in Table 3 below. In Table 1, the content was calculated on a weight percent (wt%) basis.

**[Table 1]**

| Category | First electrode slurry | | Second electrode slurry | | | |
|---|---|---|---|---|---|---|
| | LMFP content | D50 (µm) | NCM content | D50 (µm) | LMFP content | D50 (µm) |
| Example 1 | 100% | 0.6 | 100% | 4.5 | 0% | - |
| Example 2 | 100% | 0.6 | 90% | 4.5 | 10% | 0.6 |
| Example 3 | 100% | 0.6 | 70% | 4.5 | 30% | 0.6 |
| Example 4 | 100% | 0.6 | 70% | 4.5 | 30% | 1.0 |
| Comparative Example 1 | 100% | 0.6 | 40% | 4.5 | 60% | 0.6 |

FIG. 1 is a schematic diagram illustrating a cross-sectional structure of the positive electrode according to Example 4. Referring to FIG. 1, the positive electrode 100 has a structure in which a first active material layer 110 and a second active material layer 120 are sequentially formed on an aluminum (Al) current collector 101. The first active material layer 110 includes LMFP as the active material, and the second active material layer 120 includes LMFP and NCM at a ratio of 70:30 as active materials. In addition, the positive electrode 100 was manufactured with the first active material layer 110 having a loading amount approximately twice that of the second active material layer 120.

### Comparative Examples 2 and 3: Preparation of Positive electrodes

Two types of positive electrode active materials, a conductive material including a mixture of carbon nanotubes (CNT) and carbon black, and a PVDF binder were mixed at a weight ratio of 95:2:3 in an N-methylpyrrolidone (NMP) solvent to prepare an electrode slurry. The two types of positive electrode active materials were a mixture of LiMn_{0.6}Fe_{0.4}PO₄ (LMFP) and LiNi_{0.65}Co_{0.15}Mn_{0.2}O₂ (hereinafter referred to as 'NCM').

The electrode slurry was applied onto an aluminum current collector (15 µm Al A grade) using a slot die. Thereafter, the slurry was dried and rolled to prepare a positive electrode having a single-layer structure. The composition of the active materials contained in the electrode slurry is listed in Table 2 below. In Table 2, the content was calculated on a weight percent (wt%) basis.

**[Table 2]**

| Category | Electrode slurry | | | |
|---|---|---|---|---|
| | NCM content | D50 (µm) | LMFP content | D50 (µm) |
| Comparative Example 2 | 30% | 4.5 | 70% | 0.6 |
| Comparative Example 3 | 40% | 4.5 | 60% | 0.6 |

### Experimental Example 1: Calculation of Particle Size Distribution Di Values

For the positive electrodes prepared in Examples 1 to 4 and Comparative Examples 1 to 3, the Di values according to Formula 1 were calculated using the average particle diameters of the active materials contained in the active material layers. [Formula 1] $Di = \frac{\left({Di}^{2 nd}-{Di}^{1 st}\right)}{{Di}^{Total}}$

In Formula 1 above,
Di^{1st} represents the average particle size (D50) of the active material contained in the first active material layer,
Di^{2nd} represents the average particle size (D50) of the active material contained in the second active material layer, and
Di^{Total} represents the average particle size (D50) of the active materials contained in the entire active material layer including the first and second active material layers.

The positive electrodes according to Examples 1 to 4 and Comparative Example 1 controlled the content of the active materials per layer and the loading amount per layer so that the Di values according to Formula 1 satisfy Table 3 below.

**[Table 3]**

| Category | Di^{1st} (µm) | Di^{2nd} (µm) | Di^{Total} (µm) | Di |
|---|---|---|---|---|
| Example 1 | 0.6 | 4.5 | 1.76 | 2.22 |
| Example 2 | 0.6 | 4.11 | 1.76 | 1.99 |
| Example 3 | 0.6 | 3.33 | 1.76 | 1.55 |
| Example 4 | 0.6 | 3.45 | 2.07 | 1.38 |
| Comparative Example 1 | 0.6 | 2.16 | 1.76 | 0.89 |
| Comparative Example 2 | - | 2.07 | 2.07 | 1.00 |
| Comparative Example 3 | - | 2.94 | 2.94 | 1.00 |

In Table 3 above, for Comparative Examples 2 and 3, considering that they have a single-layer structure, the average particle size (D50) of the active materials in the active material layer was listed under Di^{2nd}, and the Di value according to Formula 1 was calculated as 1.

### Experimental Example 2: Measurement of High-Temperature Cycle Life and Low-Temperature Energy

### Secondary Battery Manufacture

Secondary batteries were manufactured using the positive electrodes of Examples 1 to 4 and Comparative Examples 1 to 3. Specifically, specimens prepared in Examples 1 to 4 and Comparative Examples 1 to 3 were used as the positive electrodes, respectively.

For the negative electrode, a natural graphite active material, a carbon black conductive material, and a styrene-butadiene rubber (SBR) binder were mixed at a weight ratio of 96:1.4:3 in a water solvent to prepare a negative electrode slurry. The negative electrode slurry was applied on a copper current collector, then dried and rolled to prepare a negative electrode. The porosity was controlled to 29% (v/v) by adjusting the degree of rolling.

An electrode assembly was manufactured by interposing a separator between the prepared positive electrode and negative electrode. The number of stacks of the electrode assembly was 33+1. The prepared electrode assembly was placed in an aluminum pouch case, and then an electrolyte solution was injected into the case to manufacture a secondary battery.

The electrolyte solution was prepared by dissolving 1.0 M lithium hexafluorophosphate (LiPF₆) in an organic solvent of ethylene carbonate/ethyl methyl carbonate/dimethyl carbonate (EC/EMC/DMC) mixed at a volume ratio of 30/40/30.

### High-Temperature Cycle Performance Evaluation

The prepared secondary batteries were subjected to 200 charge-discharge cycles at 45°C under 0.33C charge and 0.5C discharge conditions. The capacity retention rate (%) was evaluated at the point of 200 charge-discharge cycles. The evaluation results are shown in Table 4 below.

### Low-Temperature Energy Performance Evaluation

The prepared secondary batteries were repeatedly charged at 25°C under 0.33C conditions and discharged at -10°C under 0.33C conditions. The discharge energy (Wh) was evaluated at the point of 200 charge-discharge cycles for each secondary battery. The evaluation results are shown in Table 4 below.

**[Table 4]**

| Category | 45°C, Capacity retention rate (%) | Low-temperature energy (Wh) |
|---|---|---|
| Example 1 | 86.8 | 77.3 |
| Example 2 | 87.5 | 77.9 |
| Example 3 | 88.1 | 82.0 |
| Example 4 | 92.3 | 85.0 |
| Comparative Example 1 | 85.5 | 74.2 |
| Comparative Example 2 | 75.6 | 71.5 |
| Comparative Example 3 | 79.5 | 69.2 |

Referring to Table 4, it can be seen that Examples 1 to 4 have a capacity retention rate of 86% or more after high-temperature (45°C) charge-discharge and a low-temperature energy exceeding 77 Wh. In particular, it was confirmed that Example 4 simultaneously instantiates very excellent high-temperature and low-temperature characteristics. In comparison, Comparative Example 1 is a case where the LMFP content of the second active material layer is 60%. Comparative Example 1 exhibited a high-temperature capacity retention rate of 85.5%, but it was confirmed to have a low value of 74.2 Wh for low-temperature energy. In addition, Comparative Examples 2 and 3 are cases where the positive electrode was formed as a single layer by mixing LMFP and NCM active materials, respectively. It can be seen that Comparative Examples 2 and 3 are lower in both high-temperature and low-temperature characteristics compared to Examples 1 to 4.

Although the present disclosure has been described with reference to example aspects, those skilled in the art or those having ordinary knowledge in the technical field will understand that the present disclosure can be variously modified and changed without departing from the spirit and technical scope of the present disclosure described in the patent claims to be described later.

Therefore, the technical scope of the present disclosure should not be limited to the content described in the detailed description of the specification.

### [Description of Reference Numerals]

- 100:: POSITIVE ELECTRODE
- 101:: CURRENT COLLECTOR
- 110:: FIRST ACTIVE MATERIAL LAYER
- 120:: SECOND ACTIVE MATERIAL LAYER

## Claims

1. An electrode for a secondary battery, comprising:
a current collector;
a first active material layer formed on one surface or both surfaces of the current collector; and
a second active material layer formed on the first active material layer, wherein an entire active material layer comprising the first active material layer and the second active material layer has a Di value in a range of 1.1 to 5 according to the following Formula 1: [Formula 1] $Di = \frac{\left({Di}^{2 nd}-{Di}^{1 st}\right)}{{Di}^{Total}}$
wherein Di^{1st} represents an average particle size D50 of an active material contained in the first active material layer,
Di^{2nd} represents the average particle size D50 of an active material contained in the second active material layer, and
Di^{Total} represents the average particle size D50 of active materials contained in the entire active material layer comprising the first active material layer and the second active material layer.

2. The electrode for a secondary battery of claim 1, wherein
in Formula 1, a Di^{Total} value is in the range of 1 to 3 µm.

3. The electrode for a secondary battery of claim 1, wherein
the Di value according to Formula 1 is in the range of 1.1 to 2.5.

4. The electrode for a secondary battery of claim 1, wherein
a thickness of the first active material layer is in the range of 40% to 80% on average, based on an entire active material layer thickness.

5. The electrode for a secondary battery of claim 1, wherein
the first active material layer and the second active material layer each independently comprise one or more of the active materials according to the following Chemical Formula 1 and Chemical Formula 2 as active materials:
[Chemical Formula 1] Li₁₊ₐFe_{1-b}M¹_{b}(PO_{4-c})X_{c}
wherein in Chemical Formula 1,
M¹ includes at least one of Al, Mg, Ni, Co, Mn, Ti, Ga, Cu, V, Nb, Zr, Ce, In, Zn, or Y,
X includes at least one of F, S, or N, and
a, b, and c are in the ranges of -0.5 ≤ a ≤ 0.5, 0 ≤ b ≤ 0.9, and 0 ≤ c ≤ 0.8, respectively,
[Chemical Formula 2] LiₚNi_{1-q-r-s}Co_{q}MnᵣM²ₛO₂
wherein in Chemical Formula 2,
M² includes at least one of Al, Zr, Ti, Mg, Ta, Nb, Mo, or Cr, and 0.9 ≤ p ≤ 1.5, 0 ≤ q ≤ 1, 0 ≤ r ≤ 0.5, 0 ≤ s ≤ 0.1, and 0 ≤ q+r+s ≤ 1.

6. The electrode for a secondary battery of claim 5, wherein
in Chemical Formula 1, b is in the range of 0.3 to 0.9.

7. The electrode for a secondary battery of claim 5, wherein
in Chemical Formula 2, 1-q-r-s is in the range of 0.3 to 0.7.

8. The electrode for a secondary battery of claim 5, wherein
the first active material layer comprises the active material according to Chemical Formula 1 as an active material, and
the second active material layer comprises the active material according to Chemical Formula 2 as an active material, or comprises a mixture of the active material according to Chemical Formula 1 and the active material according to Chemical Formula 2.

9. The electrode for a secondary battery of claim 5, wherein
the second active material layer comprises a mixture of the active material according to Chemical Formula 1 and the active material according to Chemical Formula 2 as active materials, and
a mixing ratio of the active material according to Chemical Formula 1 is 40 wt% or less in the mixture of active materials.

10. The electrode for a secondary battery of claim 1, wherein
the electrode is a positive electrode.

11. A secondary battery comprising the electrode according to claim 1.

12. The secondary battery of claim 11, further comprising: a positive electrode; a negative electrode; and a separator positioned between the positive electrode and the negative electrode,
wherein the positive electrode comprises the electrode according to claim 1.

13. The secondary battery of claim 12, wherein
the negative electrode comprises a negative electrode current collector and a negative electrode active material layer positioned on the negative electrode current collector and containing a negative electrode active material, and
the negative electrode active material comprises a carbon-based active material.

14. The secondary battery of claim 13, wherein
the negative electrode active material further comprises a silicon-based active material,
the silicon-based active material comprises one or more selected from silicon (Si), silicon carbide (SiC), a silicon/carbon composite (Si/C), and silicon oxide SiO_{q}, wherein 0.8 ≤ q ≤ 2.5, and
a content of the silicon-based active material is in a range of 0.1 wt% to 30 wt%, based on a total weight of the active material in the negative electrode active material layer.

15. The secondary battery of claim 13, wherein
the secondary battery is a battery for automobiles or energy storage systems (ESS).
